# FASCICULE DE BREVET EUROPEEN

(11) **EP 2 877 270 B1**
(45) Date de publication et mention de la délivrance du brevet: **06.05.2020**
(21) Numéro de dépôt: 13730023.2
(22) Date de dépôt: 03.06.2013
(51) Int. Cl.: B01D 53/26, B01D 53/04

(54) **INSTALLATION DE PURIFICATION D'UN FLUX GAZEUX HUMIDE, CONTENANT DU CO2 ET DES NOX**
VORRICHTUNG ZUR REINIGUNG EINER NASSGASSTRÖMUNG MIT CO2 UND NOX
EQUIPMENT FOR PURIFYING A WET GAS STREAM CONTAINING CO2 AND NOX

(30) Priorité: 25.07.2012 FR 1257190
(43) Date de publication de la demande: 03.06.2015
(73) Titulaire: L'Air Liquide Société Anonyme pour l'Etude et l'Exploitation des Procédés Georges Claude, 75007 Paris (FR)
(72) Inventeur: SZAMLEWSKI, Christophe, F-77380 Combs La Ville (FR); MONEREAU, Christian, F-34000 Montpellier (FR); AMY, Samuel, F-94500 Champigny sur Marne (FR); LECLERC, Mathieu, F-75020 Paris (FR); GESBERT, Thierry, F-91370 Verrieres Le Buisson (FR)
(74) Mandataire: Laigneau, Amandine
(86) Numéro de dépôt international: PCT/FR2013/051249
(87) Numéro de publication internationale: WO 2014/016481

(56) Documents cités:
- EP-A1- 0 898 998
- FR-A1- 2 937 257
- FR-A1- 2 962 663
- US-A1- 2003 205 130

## Description

La présente invention est relative à une installation de purification d'un flux gazeux humide, contenant du CO₂ et des NOx et un procédé de purification mettant en œuvre une telle installation.

Par gaz humide, on entend un gaz d'humidité relative supérieure à 30%, préférentiellement supérieure à 80%, encore préférentiellement saturé en eau aux conditions opératoires, voire sursaturé car pouvant renfermer des particules d'eau liquide entraînées.

Par contenant du CO₂, on entend une teneur en CO₂ supérieure à 20% mole, préférentiellement supérieure à 50%, encore préférentiellement supérieure à 80%.

Par contenant des NOx, on entend que la teneur en NOx (ou acide nitrique) est supérieure ou égale à 10 ppm mole, préférentiellement supérieure à 100 ppm

Afin de réduire les émissions de CO₂ d'origine humaine dans l'atmosphère, des procédés de capture du CO₂ générés dans un procédé donné sont développés. Il s'agit d'extraire le CO₂ d'un gaz généré par le procédé, éventuellement de le purifier et enfin, en général, de le comprimer afin de le transporter dans un pipeline. Ce traitement nécessite généralement de sécher au moins partiellement le CO₂.

Les gaz issus de procédés de type Oxycombustion ont une teneur en CO₂ élevée, car l'azote a été éliminée de l'air avant combustion. Ces gaz contiennent également un pourcentage de NOX (NO & NO₂ majoritairement) issues de la combustion. Ces NOX vont entrer dans les adsorbeurs visant à sécher le CO₂ sous la forme de NO, NO₂ et aussi sous forme d'acide nitrique (HN0₃) issue de la transformation de NO en NO₂ et de NO₂ en HNO₃, en particulier si l'épuration a lieu après compression et refroidissement. Les HNO₃ sont retenus par l'adsorbant des adsorbeurs et NO et NO₂ sont retenus partiellement. Dans l'adsorbeur, les réactions de conversion de NO en NO₂ et de NO₂ en HNO₃ sont accélérées et les équilibres sont déplacés vers la formation de HNO₃. Au moment de la régénération de l'adsorbant, lors de la désorption des NOX préalablement adsorbés, il y a également possibilité de former de l'acide nitrique en présence de l'eau piégée lors de l'adsorption. Cet acide nitrique va se retrouver dans l'eau à une forte concentration. Cet acide nitrique chaud va avoir tendance à se condenser sur les parois de l'adsorbeur, au niveau de la virole et de l'extrémité de sortie du gaz de régénération un peu plus froides à cause des inévitables déperditions thermiques, même en cas d'isolation poussée. De plus, les liquides acides vont avoir tendance à s'écouler vers le fond des sécheurs dès lors que la régénération s'effectue de haut en bas, ce qui est généralement préféré afin de faciliter l'évacuation des dits liquides en s'aidant de la gravité.

Or à ces températures supérieures à l'ambiante du fait de la chaleur de régénération, la cinétique de corrosion va s'accroître également. Afin d'éviter le problème de corrosion au sein de l'adsorbeur lié à la présence d'acide nitrique concentré et chaud, une solution de l'art antérieur est de réaliser l'adsorbeur en matériaux inoxydables de type NAG (nitric acid grade). Cependant, cette solution revient à multiplier environ par 3 le prix des adsorbeurs.

Une autre solution connue est d'appliquer un revêtement en matériau noble tenant à la corrosion sur la surface intérieure de la virole qui peut alors être en acier carbone. Une telle approche est divulguée dans le document Fr 2 962 663. On parle généralement de placage pour ce procédé. Cependant, pour des équipements de grande dimension, il n'est effectué que par un nombre restreint de sociétés compte tenu des appareillages nécessaires. Le surcoût lié au placage peut compenser en grande partie l'intérêt d'utiliser partiellement un matériau moins cher. Avec cette solution, il faut se méfier des risques de corrosions locales (extrémités, raccords avec des internes).

Une amélioration éventuelle est de ne plaquer que la partie de la virole susceptible d'être corrodée. Cependant, il est difficile d'être vraiment certain qu'une partie de la virole ne sera pas sujette à la corrosion (avancée du front lié au vieillissement de l'adsorbant, modification des conditions opératoires, entraînement d'eau liquide...). Un placage partiel n'est donc pas sûr à 100%.

Dès lors, un problème qui se pose est de fournir une nouvelle installation de purification non sujette au problème de corrosion des matériaux tout en limitant l'impact du coût. Deux solutions apportées par la présente invention sont des installations avec les caractéristiques définies dans les revendications et 2.

Notons que la double enveloppe intérieure permet de protéger l'adsorbeur de la corrosion tandis que l'enveloppe extérieure en acier carbone permet d'assurer la tenue en pression. (1 à 60 bar).

L'enveloppe interne peut être constituée en pratique de plusieurs enveloppes les unes autour des autres, séparées par quelques millimètres à quelques dizaines de millimètres. L'intérêt d'un tel système est de réaliser une très bonne isolation thermique en utilisant le gaz lui-même de faible conductibilité thermique par rapport aux solides comme isolant.

En pratique même si des enveloppes internes multicouches sont envisageables, la solution à deux enveloppes est recommandée car avec l'espace entre la virole et l'enveloppe externe (de la partie interne), cela constitue déjà une isolation thermique très efficace. On appelle généralement ce système (1 virole, 2 enveloppes internes) de "double lame de gaz".

Dans ce cas, seule l'enveloppe la plus interne peut être en acier inoxydable, l'autre ou les autres étant par exemple en acier carbone comme la virole de l'adsorbeur.

L'espace entre l'enveloppe interne et l'enveloppe externe (virole), de même que celui entre les deux enveloppes internes dans le cas dit de "double lames" (2 lames suffisent généralement à assurer une très bonne isolation thermique mais on pourrait imaginer d'en utiliser plus) est à tout moment à la pression régnant dans l'adsorbeur. Cette virole interne, simple ou multiple n'a donc pas un rôle de tenue mécanique autre que le maintien de l'adsorbant et son épaisseur est minimale.

Les différentes interparois doivent donc être en liaison gazeuse suffisante afin que les variations de la pression opératoire se répercutent instantanément de part et d'autre aussi bien en cas de pressurisation que de dépressurisation. On dit que ces volumes gazeux sont en équipression, bien qu'il puisse exister quelques dizaines de millibars de différence suivant les phases de fonctionnement et/ou la hauteur dans l'adsorbeur du fait des pertes de charge à travers le lit d'adsorbant.

Cette liaison gazeuse se fait côté gaz séché afin qu'il n'y ait pas d'eau susceptible de se condenser sur les tôles en matériau standard (non de type inoxydable).

Selon le cas, l'installation selon l'invention peut présenter une ou plusieurs des caractéristiques suivantes :
- l'espace est en équipression avec la cavité par l'intermédiaire d'une liaison gazeuse débouchant dans la cavité 1 en aval de l'adsorbant 2 si on considère le trajet du flux gazeux ;
- l'enveloppe intérieure est divisée en au moins deux enveloppes intérieures formant une double enveloppe ;
- parmi les deux enveloppes intérieures seule l'enveloppe intérieure la plus interne de l'adsorbeur est en acier inoxydable.

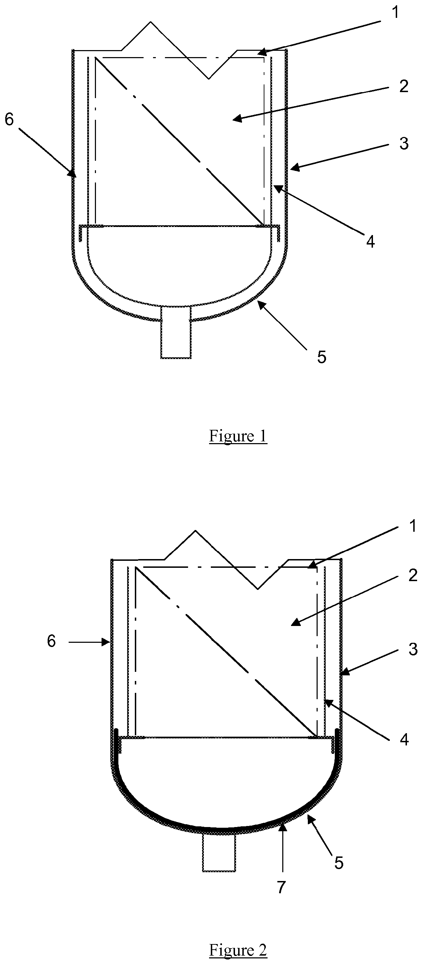

D'après la première réalisation de l'invention, l'enveloppe extérieure est divisée en une virole 6, un premier fond 5 côté entrée du flux gazeux et un deuxième fond côté sortie du flux gazeux, et l'enveloppe intérieure 4 est présente au niveau de la virole 6 et se prolonge sur le premier fond 5 (cf figure 1).

D'après la deuxième réalisation de l'invention, l'enveloppe extérieure est divisée en une virole 6, un premier fond 5 côté entrée du flux gazeux et un deuxième fond côté sortie du flux gazeux, la double enveloppe intérieure est présente au niveau de la virole, et une plaque en acier inoxydable 7 est plaquée sur le premier fond 5 (cf. figure 2). Dans ce cas la plaque en acier inoxydable est soudée au fond inférieur de l'adsorbeur et servira en partie de support aux adsorbants. Avec cette solution, on limite le placage à une partie de l'équipement, diminuant de ce fait son coût de réalisation.

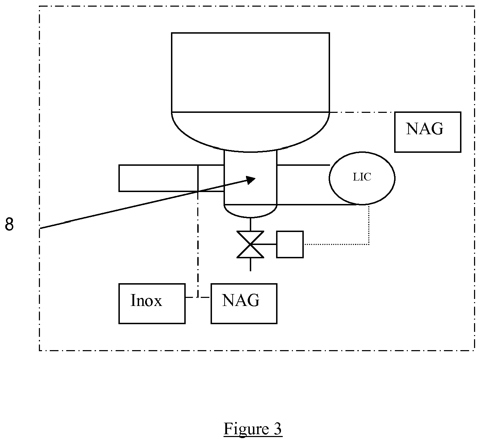

Ledit adsorbeur peut comprendre un pot séparateur 8 intégré ou accolé au premier fond permettant de séparer des condensats acides d'un gaz sortant côté entrée du flux gazeux à purifier et une tubulure de sortie pour évacuer le dit gaz débarrassé de ses condensats (cf. figure 3).

L'adsorbeur peut comprendre du gel de silice comme adsorbant. Les tuyaux de l'installation peuvent être oxydables.

Notons que dans le cas où l'adsorbeur comprend une double enveloppe intérieure au niveau de la virole et une plaque en acier inoxydable recouvrant le fond inférieur une pièce de protection en acier inoxydable assure la continuité entre la double enveloppe et le fond inférieur.

La présente invention a également pour objet un procédé de purification d'un flux gazeux comprenant au moins 0,02% en volume d'eau, du CO₂ et des NOx, mettant en œuvre une installation selon l'invention, dans lequel ledit adsorbeur est soumis à un cycle de purification comprenant une étape d'adsorption et une étape de régénération mettant en œuvre un gaz de régénération et caractérisée par la présence d'acide nitrique et d'eau liquide dans l'adsorbeur pendant l'étape de régénération.

De préférence, l'acide nitrique et l'eau sont évacués de l'installation via le pot séparateur. En effet, la double enveloppe et/ou la plaque en acier inoxydable va permettre le ruissèlement de l'eau et de l'acide jusqu'à la tubulure de sortie et au pot séparateur.

L'étape de régénération est réalisée de préférence à une température supérieure à 150°C.

## Revendications

1. Installation de purification d'un flux gazeux comprenant au moins 0,02% en volume d'eau, du CO₂ et des NOx, comprenant un adsorbeur comprenant:
- une cavité (1) ;
- un adsorbant (2) compris dans la cavité (1) ;
- une enveloppe extérieure (3) en acier carbone ;
- une enveloppe intérieure (4) en acier inoxydable ménageant un espace de largeur compris entre 10 et 100 mm entre la dite enveloppe intérieure et l'enveloppe extérieure, ledit espace étant en équipression avec la cavité,
avec :
- l'enveloppe extérieure (3) est divisée en une virole (6), un premier fond (5) côté entrée du flux gazeux et un deuxième fond côté sortie du flux gazeux, et
- l'enveloppe intérieure (4) est présente au niveau de la virole et se prolonge sur le premier fond.

2. Installation de purification d'un flux gazeux comprenant au moins 0,02% en volume d'eau, du CO₂ et des NOx, comprenant un adsorbeur comprenant:
- une cavité (1) ;
- un adsorbant (2) compris dans la cavité (1) ;
- une enveloppe extérieure (3) en acier carbone ;
- une enveloppe intérieure (4) en acier inoxydable ménageant un espace de largeur compris entre 10 et 100 mm entre la dite enveloppe intérieure et l'enveloppe extérieure, ledit espace étant en équipression avec la cavité,
avec :
- l'enveloppe extérieure (3) est divisée en une virole (6), un premier fond (5) côté entrée du flux gazeux et un deuxième fond côté sortie du flux gazeux, et
- l'enveloppe intérieure (4) est présente au niveau de la virole (6), et
- une plaque en acier inoxydable est plaquée sur le premier fond (5).

3. Installation selon l'une des revendications 1 ou 2, **caractérisée en ce que** l'espace est en équipression avec la cavité par l'intermédiaire d'une liaison gazeuse débouchant dans la cavité en aval de l'adsorbant si on considère le trajet du flux gazeux.

4. Installation selon l'une des revendications 1 à 3 **caractérisée en ce que** l'enveloppe intérieure (4) est divisée en au moins deux enveloppes intérieures formant une double enveloppe.

5. Installation selon la revendication 4, **caractérisée en ce que** parmi les deux enveloppes intérieures seule l'enveloppe intérieure la plus interne de l'adsorbeur est en acier inoxydable.

6. Installation selon l'une des revendications 1 à 5, **caractérisée en ce que** :
ledit adsorbeur comprend un pot séparateur (8) intégré ou accolé au premier fond (5) permettant de séparer des condensats acides d'un gaz sortant côté entrée du flux gazeux à purifier et une tubulure de sortie pour évacuer le dit gaz débarrassé de ses condensats.

7. Installation selon l'une des revendications 1 à 6, **caractérisée en ce que** l'adsorbeur comprend du gel de silice comme adsorbant (2).

8. Installation selon l'une des revendications 1 à 7, **caractérisée en ce que** les tuyaux de l'installation sont oxydables.

9. Procédé de purification d'un flux gazeux comprenant au moins 0,02% en volume d'eau, du CO₂ et des NOx, mettant en œuvre une installation selon l'une des revendications 1 à 8, dans lequel ledit adsorbeur est soumis à un cycle de purification comprenant une étape d'adsorption et une étape de régénération mettant en œuvre un gaz de régénération et **caractérisée par** la présence d'acide nitrique et d'eau liquide dans l'adsorbeur pendant l'étape de régénération.

10. Procédé de purification selon la revendication 9, **caractérisé en ce que** l'acide nitrique et l'eau liquide sont évacuées de l'installation via le pot séparateur (8).

11. Procédé de purification selon l'une des revendications 9 ou 10, **caractérisé en ce que** l'étape de régénération est effectuée à une température supérieure à 150°C.

## Patentansprüche

1. Vorrichtung zur Reinigung einer Gasströmung, die mindestens 0,02 Vol.-% Wasser, CO₂ und NOx umfasst, umfassend einen Adsorber, der Folgendes umfasst:
- einen Hohlraum (1);
- ein in den Hohlraum (1) eingeschlossenes Adsorptionsmittel (2);
- eine Außenhülle (3) aus Kohlenstoffstahl;
- eine Innenhülle (4) aus rostfreiem Stahl, die einen Raum mit einer Breite zwischen 10 und 100 mm zwischen der Innenhülle und der Außenhülle aufnimmt, wobei der Raum in Druckausgleich mit dem Hohlraum steht, wobei:
- die Außenhülle (3) in einen Mantel (6), einen ersten Boden (5) auf der Gasströmungseinlassseite und einen zweiten Boden auf der Gasströmungsauslassseite unterteilt ist, und
- die Innenhülle (4) auf der Ebene des Mantels vorhanden ist und sich über den ersten Boden erstreckt.

2. Vorrichtung zur Reinigung einer Gasströmung, die mindestens 0,02 Vol.-% Wasser, CO₂ und NOx umfasst, umfassend einen Adsorber, der Folgendes umfasst:
- einen Hohlraum (1);
- ein in den Hohlraum (1) eingeschlossenes Adsorptionsmittel (2);
- eine Außenhülle (3) aus Kohlenstoffstahl;
- eine Innenhülle (4) aus rostfreiem Stahl, die einen Raum mit einer Breite zwischen 10 und 100 mm zwischen der Innenhülle und der Außenhülle aufnimmt, wobei der Raum in Druckausgleich mit dem Hohlraum steht, wobei:
- die Außenhülle (3) in einen Mantel (6), einen ersten Boden (5) auf der Gasströmungseinlassseite und einen zweiten Boden auf der Gasströmungsauslassseite unterteilt ist, und
- die Innenhülle (4) auf der Ebene des Mantels (6) vorhanden ist, und
- eine Platte aus rostfreiem Stahl auf dem ersten Boden (5) plattiert ist.

3. Vorrichtung nach einem der Ansprüche 1 oder 2, **dadurch gekennzeichnet, dass** der Raum mittels einer Gasverbindung, die unter Berücksichtigung des Weges der Gasströmung stromabwärts des Adsorptionsmittels in den Hohlraum mündet, mit dem Hohlraum in Druckausgleich steht.

4. Vorrichtung nach einem der Ansprüche 1 bis 3, **dadurch gekennzeichnet, dass** die Innenhülle (4) in mindestens zwei eine Doppelhülle bildende Innenhüllen unterteilt ist.

5. Vorrichtung nach Anspruch 4, **dadurch gekennzeichnet, dass** von den beiden Innenhüllen nur die innerste Innenhülle des Adsorbers aus rostfreiem Stahl besteht.

6. Vorrichtung nach einem der Ansprüche 1 bis 5, **dadurch gekennzeichnet, dass**:
der Adsorber einen Abscheidetopf (8), der in den ersten Boden (5) integriert oder daran befestigt ist, um Säurekondensate von einem an der Gasströmungseinlassseite austretenden Gas abzutrennen, und ein Auslassrohr zum Abführen des von seinen Kondensaten befreiten Gases umfasst.

7. Vorrichtung nach einem der Ansprüche 1 bis 6, **dadurch gekennzeichnet, dass** der Adsorber Kieselgel als Adsorptionsmittel (2) umfasst.

8. Vorrichtung nach einem der Ansprüche 1 bis 7, **dadurch gekennzeichnet, dass** die Rohre der Vorrichtung oxidierbar sind.

9. Verfahren zur Reinigung einer Gasströmung, die mindestens 0,02 Vol.-% Wasser, CO₂ und NOx umfasst, unter Verwendung einer Vorrichtung nach einem der Ansprüche 1 bis 8, wobei der Adsorber einem Reinigungszyklus unterworfen wird, der einen Adsorptionsschritt und einen Regenerationsschritt unter Verwendung eines Regenerationsgases umfasst und durch die Anwesenheit von Salpetersäure und flüssigem Wasser im Adsorber während des Regenerationsschritts gekennzeichnet ist.

10. Reinigungsverfahren nach Anspruch 9, **dadurch gekennzeichnet, dass** die Salpetersäure und das flüssige Wasser über den Abscheidetopf (8) aus der Vorrichtung abgeführt werden.

11. Reinigungsverfahren nach einem der Ansprüche 9 oder 10, **dadurch gekennzeichnet, dass** der Regenerationsschritt bei einer Temperatur über 150°C durchgeführt wird.

## Claims

1. Equipment for purifying a gas stream comprising at least 0.02% by volume of water, CO₂ and NOx, comprising an adsorber comprising:
- a cavity (1);
- an adsorbent (2) comprised in the cavity (1);
- a carbon steel outer case (3);
- a stainless steel inner case (4) forming a space between 10 and 100 mm in width between said inner case and the outer case, wherein said space is at equal pressure with the cavity
with:
- the outer case (3) is divided into a ferrule (6), a first bottom (5) on the inlet side of the gas stream and a second bottom on the outlet side of the gas stream, and
- the inner case (4) is present at the ferrule and is extended over the first bottom.

2. Equipment for purifying a gas stream comprising at least 0.02% by volume of water, CO₂ and NOx, comprising an adsorber comprising:
- a cavity (1);
- an adsorbent (2) comprised in the cavity (1);
- a carbon steel outer case (3);
- a stainless steel inner case (4) forming a space between 10 and 100 mm in width between said inner case and the outer case, wherein said space is at equal pressure with the cavity,
with:
- the outer case (3) is divided into a ferrule (6), a first bottom (5) on the inlet side of the gas stream and a second bottom on the outlet side of the gas stream, and
- the inner case (4) is present on the ferrule (6), and
- a stainless steel plate is thrust on the first bottom (5).

3. Equipment according to one of claims 1 or 2, **characterised in that** the space is at equal pressure with the cavity through a gaseous connection that opens into the cavity downstream from the adsorbent if the path of the gas stream is considered.

4. Equipment according to one of claims 1 to 3, **characterised in that** the inner case (4) is divided into at least two inner cases forming a double case.

5. Equipment according to claim 4, **characterised in that** among the two inner cases, only the most inner case of the adsorber is made of stainless steel.

6. Equipment according to one of claims 1 to 5, **characterised in that**:
said adsorber comprises a separator (8) integrated or adjoining the first bottom (5) making it possible to separate acid condensates from a gas exiting on the inlet side of the gas stream to be purified and an outlet tubing to remove said gas stripped of the condensates thereof.

7. Equipment according to one of claims 1 to 6, **characterised in that** the adsorber comprises silica gel as an adsorbent (2).

8. Equipment according to one of claims 1 to 7, **characterised in that** the pipes of the equipment are oxidisable.

9. Method for purifying a gas stream comprising at least 0.02% by volume of water, CO₂ and NOx, implementing equipment according to one of claims 1 to 8, wherein said adsorber is subjected to a purification cycle that comprises an adsorption step and a regeneration step implementing a regeneration gas and **characterised by** the presence of nitric acid and of liquid water in the adsorber during the regeneration step.

10. Purification method according to claim 9, **characterised in that** the nitric acid and the liquid water are removed from the equipment via the separator (8).

11. Purification method according to one of claims 9 or 10, **characterised in that** the regeneration step is carried out at a temperature greater than 150°C.
